# EUROPEAN PATENT APPLICATION

(11) **EP 3 913 106 A1**
(43) Date of publication of application: **24.11.2021**
(21) Application number: 19910043.9
(22) Date of filing: 26.09.2019
(51) Int. Cl.: C23C 2/02, C21D 9/46, C22C 38/00, C22C 38/04, C22C 38/60, C23C 2/06, C23C 2/40

(54) **METHOD FOR MANUFACTURING HOT-DIP GALVANIZED STEEL SHEET**

(30) Priority: 18.01.2019 JP 2019007320
(71) Applicant: JFE Steel Corporation, Tokyo 100-0011 (JP)
(72) Inventor: AOYAMA Mai, Tokyo 100-0011 (JP); SUZUKI Yoshitsugu, Tokyo 100-0011 (JP)
(74) Representative: Grünecker Patent- und Rechtsanwälte PartG mbB
(86) International application number: PCT/JP2019/038021
(87) International publication number: WO 2020/148944

(57) **Abstract**

Disclosed is a method of producing a hot-dip galvanized steel sheet with excellent surface appearance, coating adhesion, and corrosion resistance. A method of producing a hot-dip galvanized steel sheet disclosed herein includes: performing first annealing comprising holding a steel sheet having a chemical composition containing, in mass%, Si: 0.10 % or more and 3.0 % or less and Mn: 1.0 % or more and 10.0 % or less within a temperature range of 650 °C to 900 °C for 30 seconds or more in a reducing atmosphere containing hydrogen and having a dew point of -65 °C or higher and -20 °C or lower, and then cooling the steel sheet; then forming, on a surface of the steel sheet, an Fe coating with a coating weight of 0.3 g/m² or more and 10.0 g/m² or less; then performing second annealing comprising holding the steel sheet within a temperature range of 700 °C to 900 °C for 30 seconds or more in a reducing atmosphere containing hydrogen and having a dew point of 0 °C or lower, heating the steel sheet to a maximum arrival temperature of 900 °C or lower, and then cooling the steel sheet; and then applying a hot-dip galvanized coating onto the steel sheet.

## Description

### TECHNICAL FIELD

This disclosure relates to a method of producing a hot-dip galvanized steel sheet suitable for use in components in industrial fields such as automobiles.

### BACKGROUND

In recent years, from the viewpoint of preserving the global environment, improving the fuel efficiency of automobiles has become an important issue. For this reason, there is a growing trend to make automotive bodies lighter by making the steel sheets used as the materials for automobile components stronger and thinner (lighter). However, since higher strength of steel sheets leads to lower formability, it is desirable to develop steel sheets that have both high strength and high formability. In addition, a high-strength galvanized steel sheet is required from the viewpoint of rust prevention performance of automobile bodies.

In order to improve the formability of a steel sheet, it is effective to add solute elements such as Si and Mn to the steel sheet. On the other hand, these solute elements deteriorate the surface properties of hot-dip galvanized steel sheets for automobiles. High-strength galvanized steel sheets for automobiles are generally produced by hot-dip galvanizing treatment. Steel sheets are annealed in a reducing atmosphere, which recrystallizes the rolled microstructure and activates the surfaces of the steel sheets. After cooling, the steel sheets are immersed in molten zinc and the surfaces are hot-dip galvanized. Si and Mn, which are added to increase the strength of the steel sheet, form oxides on the surface of the steel sheet through annealing, and these oxides deteriorate the wettability between the molten zinc and the steel sheet, resulting in non-coating. Si, in particular, not only causes non-coating, but also reduces the coating alloying speed and productivity when the zinc coating is heated and alloyed. When performing alloying treatment at high temperature to increase productivity, it becomes difficult to control the Fe concentration in the Fe-Zn alloy phase, and the coating adhesion decreases.

To address these issues, there is a technology for applying Fe-based coating to the surfaces of steel sheets before annealing them in a reducing atmosphere, as described in PTLs 1 and 2.

PTL 1 describes, "a method of producing a high-strength galvannealed steel sheet, the steel sheet comprising: hot rolling a steel having a composition consisting of C: 0.05 % to 0.3 %, Si: 1.0 % or less, Mn: 0.5 % to 3.5 %, P: 0.1 % or less, S: 0.1 % or less, Nb: 0.01 % to 0.3 %, N: 100 ppm or less, with the balance being substantially Fe, at or above the Ar₃ transformation temperature to obtain a hot-rolled steel strip, and coiling the hot-rolled steel strip; then cold rolling the steel strip; then subjecting the steel strip to iron-based pre-coating; then subjecting the steel strip to annealing treatment in a continuous hot-dip galvanizing line by heating and holding it in a recrystallization temperature range for 10 seconds to 300 seconds; then subjecting the steel strip to hot-dip galvanizing; and then subjecting the steel strip to alloying treatment in a temperature range of 450 °C to 600 °C". In this method, an Fe-based pre-coating is applied to the surface of the steel sheet before subjection to annealing, to thereby improve the coating wettability.

PTL 2 describes, "a method of producing a galvannealed steel sheet with excellent coating adhesion in which a galvannealed layer is formed on a surface of a base steel sheet satisfying a condition of 1.0 % to 3.0 % (meaning mass%, the same applies to the chemical composition below) of Si, the method comprising: hot rolling a steel satisfying the above chemical composition to obtain a hot-rolled sheet; then coiling the hot-rolled sheet at 600 °C to 800 °C; pickling the hot-rolled sheet at 70 °C to 90 °C for 10 seconds or more; and then applying an iron-based pre-coating with a coating weight of 3 g/m2 to 8 g/m2 per side". In this method, not only Fe-based pre-coating is performed, but also the coiling temperature and pickling conditions are optimized to properly generate oxides (internal oxides) containing Fe and Si inside the steel sheet, and then Fe-based pre-coating is performed to further improve the coating adhesion.

PTL 3 describes, "a method of producing a high-strength hot-dip galvanized steel sheet with excellent coating adhesion and hole expansion formability, the method comprising: continuous annealing a cold-rolled steel sheet; then pre-coating the steel sheet with one or more of Ni, Fe, Co, Sn, and Cu at a coating weight of 0.01 g/m² to 2.0 g/m² per side of the steel sheet; then heating to 250 °C to 600 °C; and then subjecting the steel sheet to hot-dip galvanizing treatment". In this method, coating adhesion is improved by performing pre-coating after continuous annealing and before hot-dip galvanizing.

### CITATION LIST

### Patent Literature

PTL 1: JPH7-252622A
PTL 2: JP2011-214102A
PTL 3: JP2005-200694A

### SUMMARY

### (Technical Problem)

However, in the technology of PTL 1, it is found that when the addition amount of Si and Mn is high, the formation of Si and Mn oxides on the surface of the steel sheet cannot be completely suppressed, and the surface appearance and coating adhesion deteriorate. In addition, the technology of PTL 2 is also found to be insufficient in terms of surface appearance and coating adhesion, and it is also found that corrosion resistance is insufficient due to internal oxidation.

In the technology of PTL 3, it is found that the surface appearance and corrosion resistance deteriorate because the pre-coated surface is not activated and the wettability of molten zinc decreases due to the lack of annealing after pre-coating, and that the coating adhesion deteriorates because the adhesion of the pre-coating to the base steel sheet is not sufficient.

It would thus be helpful to provide a method of producing a hot-dip galvanized steel sheet with excellent surface appearance, coating adhesion, and corrosion resistance.

### (Solution to Problem)

In order to address the above issues, the present inventors made intensive studies, and obtained the following knowledge.

In order to suppress the formation of oxides of Si and Mn on the surface of a steel sheet, it is appropriate to form a coating made of Fe, which is the main component of the steel sheet, on the surface of the steel sheet before annealing. However, it was revealed that simply forming an Fe coating before annealing was insufficient for obtaining proper coating adhesion. After investigating the cause of this, the following findings were obtained. When annealing is performed after forming an Fe coating, recrystallization of the Fe coating and the steel sheet through annealing occurs simultaneously with diffusion of added elements such as Si and Mn from the steel sheet to the Fe coating. In other words, it was found that the diffusion of Si and Mn to the surface of the steel sheet was not sufficiently suppressed, and the coating appearance and adhesion deteriorated. Therefore, the present inventors came up with the idea of completing recrystallization of the steel sheet in advance by performing annealing even before an Fe coating is formed on the surface of the steel sheet, and furthermore, turning Si and Mn near the surface layer of the steel sheet into oxides during the annealing, that is, promoting internal oxidation. Then, the present inventors found that in the case where an Fe coating is formed and the second annealing is performed, the diffusion of Si and Mn to the surface of the steel sheet can be sufficiently suppressed during the second annealing, and the coating appearance and adhesion can be improved.

The present disclosure was completed based on the above discoveries, and primary features thereof are as follows:
(1) A method of producing a hot-dip galvanized steel sheet, the method comprising: performing first annealing comprising holding a steel sheet having a chemical composition containing, in mass%, Si: 0.10 % or more and 3.0 % or less and Mn: 1.0 % or more and 10.0 % or less, within a temperature range of 650 °C to 900 °C for 30 seconds or more in a reducing atmosphere containing hydrogen and having a dew point of -65 °C or higher and -20 °C or lower, and then cooling the steel sheet; then forming, on a surface of the steel sheet, an Fe coating with a coating weight of 0.3 g/m² or more and 10.0 g/m² or less; then performing second annealing comprising holding the steel sheet within a temperature range of 700 °C to 900 °C for 30 seconds or more in a reducing atmosphere containing hydrogen and having a dew point of 0 °C or lower, heating the steel sheet to a maximum arrival temperature of 900 °C or lower, and then cooling the steel sheet; and then applying a hot-dip galvanized coating onto the steel sheet.
(2) The method of producing a hot-dip galvanized steel sheet according to (1), further comprising: heating and alloying the galvanized coating applied onto the steel sheet.
(3) The method of producing a hot-dip galvanized steel sheet according to (1) or (2), wherein in the first annealing, the reducing atmosphere has a hydrogen concentration of 1.0 vol% or more and 30.0 vol% or less.
(4) The method of producing a hot-dip galvanized steel sheet according to any one of (1) to (3), wherein in the second annealing, the reducing atmosphere has a hydrogen concentration of 1.0 vol% or more and 30.0 vol% or less.
(5) The method of producing a hot-dip galvanized steel sheet according to any one of (1) to (4), wherein the chemical composition further contains (consists of), in mass%, C: 0.010 % or more and 0.250 % or less, P: 0.100 % or less, S: 0.0200 % or less, N: 0.0100 % or less, with the balance being Fe and inevitable impurities.
(6) The method of producing a hot-dip galvanized steel sheet according to (5), wherein the chemical composition further contains, in mass%, at least one selected from the group consisting of Al: 0.01 % or more and 2.0 % or less, Mo: 0.005 % or more and 1.0 % or less, Nb: 0.005 % or more and 0.20 % or less, B: 0.0003 % or more and 0.0050 % or less, Ti: 0.005 % or more and 0.20 % or less, Cr: 0.005 % or more and 1.0 % or less, Cu: 0.005 % or more and 1.0 % or less, V: 0.005 % or more and 0.50 % or less, Ni: 0.005 % or more and 1.0 % or less, Sb: 0.003 % or more and 0.10 % or less, Sn: 0.002 % or more and 0.20 % or less, Ca: 0.0005 % or more and 0.0050 % or less, Mg: 0.0005 % or more and 0.0050 % or less, and REM: 0.0005 % or more and 0.0050 % or less.

### (Advantageous Effect)

According to the method of producing a hot-dip galvanized steel sheet disclosed herein, it is possible to produce a hot-dip galvanized steel sheet with excellent surface appearance, coating adhesion, and corrosion resistance.

### DETAILED DESCRIPTION

A method of producing a hot-dip galvanized steel sheet according to one of the embodiments disclosed herein comprises: performing first annealing on a steel sheet having a predetermined chemical composition in a reducing atmosphere, then forming an Fe coating on a surface of the steel sheet, then performing second annealing on the steel sheet in a reducing atmosphere, and then applying a hot-dip galvanized coating onto the steel sheet, and optionally thereafter, heating and alloying the galvanized coating applied onto the steel sheet. This embodiment is characterized by performing annealing of the steel sheet in a reducing atmosphere before and after the forming of the Fe coating, the technical significance of which will be described later.

### (Chemical Composition)

The chemical composition of the steel sheet will be described below. Hereinafter, "mass%" is simply referred to as "%". In this embodiment, the chemical composition of the steel sheet is not particularly limited as long as it contains Si in an amount of 0.10 % or more and 3.0 % or less and Mn in an amount of 1.0 % or more and 10.0 % or less. However, from the viewpoint of facilitating the achievement of TS of 590 MPa or more, it is preferable to contain C in an amount of 0.010 % or more, and it is preferable to contain C in an amount of 0.250 % or less.

### C: 0.010 % or more and 0.250 % or less

C is an element necessary for increasing the strength by generating low-temperature transformation phases such as martensite. C is also a useful element for increasing the stability of retained austenite and the ductility of steel. If the C content is less than 0.010 %, it is difficult to obtain the desired strength. From this point of view, the C content is preferably 0.010 % or more, and more preferably 0.080 % or more. On the other hand, excessive addition of C results in the formation of a large amount of hard martensite, which reduces bendability and stretch flangeability. In addition, the hardening of the welded portion and heat-affected zone is remarkable, and the mechanical properties of the welded portion deteriorate, resulting in degradation of spot weldability and arc weldability. From this perspective, the C content is preferably 0.250 % or less, and more preferably 0.200 % or less.

### Si: 0.10 % or more and 3.0 % or less

Si improves the strain hardenability of ferrite and is therefore effective in ensuring good ductility. If the Si content is less than 0.10 %, the effect of Si addition becomes poor. Therefore, the Si content is 0.10 % or more, and preferably 0.20 % or more. On the other hand, excessive addition of Si not only causes embrittlement of the steel but also degradation of the surface characteristics due to the generation of red scale and so on. If the Si content exceeds 3.0 %, coating adhesion cannot be secured in the present disclosure. From this perspective, the Si content is 3.0 % or less, and preferably 2.9 % or less.

### Mn: 1.0 % or more and 10.0 % or less

Mn is an element that stabilizes retained austenite, is effective in ensuring good ductility, and also increases the strength of the steel by solid solution strengthening. These effects are obtained when the Mn content of the steel is 1.0 % or more. Therefore, the Mn content is 1.0 % or more, and preferably 1.2 % or more. However, excessive addition of Mn causes cost increase. Therefore, the Mn content is 10.0 % or less, and preferably 8.5 % or less.

### P: 0.100 % or less

Excessive addition of P causes deterioration of weldability and, when a galvanized coating is subjected to alloying treatment, reduces the alloying rate, impairing the galvanization quality. Therefore, the P content is preferably 0.100 % or less, and more preferably 0.050 % or less. However, under production constraints, the P content is preferably 0.001 % or more.

### S: 0.0200 % or less

S segregates at the grain boundaries and embrittles the steel during hot working, and also exists as sulfides and reduces the local deformability. Therefore, the S content is preferably 0.0200 % or less, more preferably 0.0100 % or less, and even more preferably 0.0050 % or less. However, under production constraints, the S content is preferably 0.0001 % or more.

### N: 0.0100 % or less

N is an element that degrades the aging resistance of steel. In particular, if the N content exceeds 0.0100 %, the deterioration in aging resistance becomes more pronounced. Therefore, a lower N content is preferable, and the N content is preferably 0.0100 % or less, and more preferably 0.0070 % or less. However, under production constraints, the N content is preferably 0.0005 % or more, and more preferably 0.0010 % or more.

The balance other than the above components is Fe and inevitable impurities. However, the chemical composition may optionally contain at least one selected from the following.

### Al: 0.01 % or more and 2.0 % or less

Al is a useful element for increasing the area of a ferrite-austenite dual phase region and reducing annealing temperature dependency, i.e., increasing the stability of the steel sheet as a material. Al also acts as a deoxidizer and is effective for the cleanliness of the steel, and it is preferable to add Al during the deoxidization process. From the viewpoint of obtaining these addition effects, the Al content is preferably 0.01 % or more, and more preferably 0.20 % or more. However, excessive addition of Al increases the risk of cast steel cracking during continuous casting and reduces the manufacturability. From this perspective, when Al is added, the Al content is 2.0 % or less, and preferably 1.2 % or less.

### Mo: 0.005 % or more and 1.0 % or less

Mo has the effect of improving the balance between strength and ductility. From the viewpoint of obtaining the addition effect, the Mo content is preferably 0.005 % or more. However, excessive addition of Mo results in an excess of hard phase, which reduces formability. It is also a factor in cost increase. Therefore, when Mo is added, the Mo content is 1.0 % or less.

### Nb: 0.005 % or more and 0.20 % or less

Nb is effective in precipitation strengthening of steel. From the viewpoint of obtaining the addition effect, the Nb content is preferably 0.005 % or more, and more preferably 0.010 % or more. However, excessive addition of Nb results in an excess of hard phase, which reduces formability. It is also a factor in cost increase. Therefore, when Nb is added, the Nb content is 0.20 % or less, and preferably 0.10 % or less.

### B: 0.0003 % or more and 0.0050 % or less

B may be added as necessary, since it has the effect of suppressing the generation and growth of ferrite from austenite grain boundaries and enables microstructure control according to the circumstances. From the viewpoint of obtaining the addition effect, the B content is preferably 0.0003 % or more, and more preferably 0.0005 % or more. However, excessive addition of B reduces the formability. Therefore, when B is added, the B content is 0.0050 % or less, and preferably 0.0030 % or less.

### Ti: 0.005 % or more and 0.20 % or less

Ti is effective in precipitation strengthening of steel. From the viewpoint of obtaining this addition effect, the Ti content is preferably 0.005 % or more, and more preferably 0.010 % or more. However, excessive addition of Ti results in an excess of hard phase, which reduces formability. Therefore, when Ti is added, the Ti content is 0.20 % or less, and preferably 0.10 % or less.

### Cr: 0.005 % or more and 1.0 % or less

Cr has the effect of improving the balance between strength and ductility. From the viewpoint of obtaining the addition effect, the Cr content is preferably 0.005 % or more. However, excessive addition of Cr results in an excess of hard phase, which reduces formability. It is also a factor in cost increase. Therefore, when Cr is added, the Cr content is 1.0 % or less.

### Cu: 0.005 % or more and 1.0 % or less

Cu is an element that is effective in strengthening the steel. From the viewpoint of obtaining the addition effect, the Cu content is preferably 0.005 % or more. However, excessive addition of Cu results in an excess of hard phase, which reduces formability. Therefore, when Cu is added, the Cu content is 1.0 % or less.

### V: 0.005 % or more and 0.50 % or less

V has the effect of improving the balance between strength and ductility. From the viewpoint of obtaining the addition effect, the V content is 0.005 % or more. However, excessive addition of V results in an excess of hard phase, which reduces formability. It is also a factor in cost increase. Therefore, when V is added, the V content is 0.50 % or less.

### Ni: 0.005 % or more and 1.0 % or less

Ni is an element that stabilizes retained austenite, is effective in ensuring good ductility, and also increases the strength of the steel by solid solution strengthening. From the viewpoint of obtaining the addition effect, the Ni content is preferably 0.005 % or more. However, excessive addition of Ni results in an excess of hard phase, which reduces bendability and stretch flangeability. It is also a factor in cost increase. Therefore, when Ni is added, the Ni content is 1.0 % or less.

### Sb: 0.003 % or more and 0.10 % or less

### Sn: 0.002 % or more and 0.20 % or less

Sn and Sb are added as necessary from the viewpoint of suppressing decarburization in a region of several tens of micrometers in the surface layer of the steel sheet caused by nitriding or oxidation on the surface of the steel sheet. This suppression of nitriding and oxidation prevents the area ratio of martensite from decreasing on the surface of the steel sheet, and is effective in ensuring the strength and the stability of the steel sheet as a material. From this perspective, the Sb content is preferably 0.003 % or more, and the Sn content is preferably 0.002 % or more. However, excessive addition of any of these elements causes a decrease in toughness. Therefore, when Sb is added, the Sb content is 0.10 % or less, and when Sn is added, the Sn content is 0.20 % or less.

### Ca: 0.0005 % or more and 0.0050 % or less

### Mg: 0.0005 % or more and 0.0050 % or less

### REM: 0.0005 % or more and 0.0050 % or less

Ca, Mg, and REM are useful elements for causing spheroidization of sulfides and mitigating the adverse effect of sulfides on hole expansion formability (stretch flangeability). To obtain this effect, the content of each added element is preferably 0.0005 % or more. However, for example, excessive addition of these elements causes an increase in inclusions and leads to surface defects and internal defects. Therefore, when any of Ca, Mg, and REM are added, the content of each added element is 0.0050 % or less.

### (Production Process of the Steel Sheet)

The steel sheet to be subjected to the following first annealing and subsequent treatments can be produced by any known or arbitrary method. For example, a slab having the above composition can be heated and hot rolled to obtain a hot-rolled steel sheet, then the hot-rolled steel sheet can be subjected to pickling, optionally followed by cold rolling, to obtain a cold-rolled steel sheet.

### (First Annealing)

In first annealing, the steel sheet having the above composition is held within a temperature range of 650 °C to 900 °C for 30 seconds or more in a reducing atmosphere containing hydrogen and having a dew point of ―65 °C or higher and ―20 °C or lower, and then cooled. The first annealing is performed to recrystallize the steel sheet and to (internally) oxidize Si and Mn present near the surface layer of the steel sheet.

### Hydrogen concentration: 1.0 vol% or more and 30.0 vol% or less

Hydrogen is necessary to inhibit the oxidation of Fe on the surface of the steel sheet during heat treatment. When the hydrogen concentration is 1.0 vol% or more, deterioration of coating adhesion due to oxidation of Fe on the surface of the steel sheet can be avoided. Therefore, the hydrogen concentration is preferably 1.0 vol% or more, and more preferably 2.0 vol% or more. Although the upper limit of the hydrogen concentration is not particularly limited, from the cost perspective, it is preferably 30.0 vol% or less, and more preferably 20.0 vol% or less.

### Dew point: -65 °C or higher and -20 °C or lower

If the dew point in the atmosphere exceeds -20 °C, excessive oxidation occurs inside the steel sheet, and the corrosion resistance of the hot-dip galvanized steel sheet deteriorates. Therefore, the dew point is -20 °C or lower, and preferably -25 °C or lower. On the other hand, if the dew point is lower than -65 °C, the oxidation rate of Si and Mn is extremely low, and it is difficult to sufficiently oxidize Si and Mn present near the surface layer of the steel sheet. Therefore, the dew point is -65 °C or higher, and preferably -50 °C or higher.

### Holding time in a temperature range of 650 °C to 900 °C: 30 seconds or more

If the holding time in this temperature range is shorter than 30 seconds, Si and Mn are not sufficiently oxidized, and Si and Mn form oxides on the surface of the Fe coating during the second annealing to be described later, resulting in deterioration of the surface appearance and coating adhesion. Therefore, the holding time in this temperature range is 30 seconds or more. Preferably, the holding time in the temperature range is 50 seconds or more. The upper limit of the holding time in this temperature range is not specified, yet it is preferable that the holding time in the temperature range be not longer than 600 seconds, because a longer furnace length would otherwise be required, resulting in lower productivity.

### Maximum arrival temperature of the steel sheet: 650 °C or higher and 900 °C or lower

If the maximum arrival temperature is lower than 650 °C, the holding time in the above temperature range is 0 seconds. Therefore, the maximum arrival temperature is 650 °C or higher. In addition, from the viewpoint of promoting internal oxidation, the maximum arrival temperature is preferably 700 °C or higher. Since the purpose of the first annealing is to internally oxidize Si and Mn, the upper limit of the maximum arrival temperature is not particularly limited. However, if the maximum arrival temperature exceeds 900 °C, the damage to the furnace body of the heat treatment furnace increases, resulting in higher costs, although there is no problem in oxidizing Si and Mn. Therefore, the maximum arrival temperature is preferably 900 °C or lower.

### (Formation of Fe coating)

Then, Fe coating is formed on the surface of the steel sheet. The formation of Fe coating is performed to delay the diffusion of Si and Mn to the surface of the steel sheet. The method of forming Fe coating is not particularly limited, and any known method such as electroplating, vapor deposition, and cold spraying can be applied.

The Fe coating may contain trace amounts of C, O, P, and N. Excessive addition of C degrades the mechanical properties of welded portions, and thus deteriorates the spot weldability, arc weldability, and so on. The C content in the Fe coating is preferably 0.250 % or less. Excessive addition of O forms oxides with Fe and degrades the coating adhesion. Therefore, the O content in the Fe coating is 0.100 % or less. P may cause an increase in the alloying temperature. Therefore, the P content in the Fe coating is 0.100 % or less. N may deteriorate the aging resistance. Therefore, the N content in the Fe coating is 0.01 % or less.

When the coating weight of Fe is less than 0.3 g/m², Si and Mn diffuse into the surface of the Fe coating during the second annealing to be described later, and the surface appearance and coating adhesion deteriorate. Therefore, the coating weight of the Fe coating is 0.3 g/m² or more, and preferably 1.0 g/m² or more. On the other hand, if the coating weight of the Fe coating exceeds 10.0 g/m², the alloying temperature is too low, coating adhesion deteriorates, for example, ζ-phase remains and slidability decreases, causing coating peel during press working. Therefore, the coating weight of the Fe coating is 10.0 g/m² or less, and preferably 8.5 g/m² or less.

### (Second Annealing)

In the second annealing, the steel sheet after the formation of the Fe coating is held within a temperature range of 700 °C to 900 °C for 30 seconds or more in a reducing atmosphere containing hydrogen and having a dew point of 0 °C or lower, and then cooled. The second annealing process is performed to adjust the microstructure of the Fe coating and to activate the surface before hot-dip galvanizing in order to improve the surface appearance and coating adhesion.

Hydrogen concentration: 1.0 vol% or more and 30.0 vol% or less Hydrogen is necessary to suppress the oxidation of Fe on the surface of the steel sheet during heat treatment and to activate the surface of the steel sheet. When the hydrogen concentration is 1.0 vol% or more, deterioration of coating adhesion due to oxidation of Fe on the surface of the steel sheet can be avoided. Therefore, the hydrogen concentration is preferably 1.0 vol% or more, and more preferably 2.0 vol% or more. The upper limit of the hydrogen concentration is not particularly limited, yet if the hydrogen concentration exceeds 30.0 vol%, the surface activation effect becomes saturated and the cost increases. Therefore, the hydrogen concentration is preferably 30.0 vol% or less, and more preferably 20.0 vol% or less.

### Dew point: 0 °C or less

If the dew point exceeds 0 °C, oxidation of the Fe coating occurs and the surface appearance and coating adhesion deteriorate. Therefore, the dew point is 0 °C or lower. It is preferably -5 °C or lower. The lower limit of the dew point is not particularly limited, yet since it is industrially difficult to achieve a dew point below -80 °C, the dew point is -80 °C or higher. It is preferably -55°C or higher.

### Holding time in a temperature range of 700 °C to 900 °C: 30 seconds or more

If the holding time in the temperature range is shorter than 30 seconds, a natural oxide layer on the Fe coating is not sufficiently removed and oxides exist directly under the coating, resulting in degradation of the coating adhesion. Also, in the case of alloying, recrystallization of the Fe coating does not progress sufficiently, resulting in excessive alloying, which deteriorates the coating adhesion. Therefore, the holding time in this temperature range is 30 seconds or more. Preferably, the holding time in this temperature range is 50 seconds or more. The upper limit of the holding time in this temperature range is not specified, yet it is preferable that the holding time in this temperature range be not longer than 600 seconds, because a longer furnace length would otherwise be required, resulting in lower productivity.

### Maximum arrival temperature of the steel sheet: 700 °C or higher and 900 °C or lower

If the maximum arrival temperature is lower than 700 °C, the holding time in the above temperature range will be 0 seconds. Therefore, the maximum arrival temperature is 700 °C or higher. In fact, if the maximum arrival temperature is lower than 700 °C, recrystallization of the Fe coating does not proceed, and Si and Mn tend to diffuse to the surface of the Fe coating, resulting in deterioration of the surface appearance and coating adhesion. In addition, in order to promote recrystallization of the Fe coating, the maximum arrival temperature is preferably 750 °C or higher. On the other hand, if the maximum arrival temperature exceeds 900 °C, the diffusion rate of Si and Mn increases extremely, and they diffuse excessively to the surface of the Fe coating, resulting in deterioration of the surface appearance and coating adhesion. In addition, Si diffuses excessively in the Fe coating, resulting in a higher alloying temperature. In addition, the damage to the furnace body of the heat treatment furnace increases, resulting in higher costs. Therefore, the maximum arrival temperature is 900 °C or lower. It is preferably 870 °C or lower.

### (Hot-dip Galvanizing)

Hot-dip galvanizing is a process in which the steel sheet after subjection to the second annealing is immersed in a hot dip galvanizing bath to form a hot-dip galvanized layer.

It is preferable to use a galvanizing bath with a bath temperature of 440 °C to 550 °C and a bath Al concentration of 0.10 % to 0.30 %. If the bath temperature is lower than 440 °C, temperature fluctuation in the bath may cause Zn solidification in a low temperature zone. If the bath temperature exceeds 550 °C, evaporation of the bath is severe and the vaporized Zn adheres to the interior of the furnace, which may cause operational problems. If the Al concentration in the bath is less than 0.10 %, a large amount of Γ-phase may be formed, deteriorating the coating adhesion. If the Al concentration in the bath exceeds 0.30 %, Al in the bath forms a thick oxide layer on the surface of the zinc bath, which may cause surface defects.

### (Heat Alloying)

After the hot-dip galvanizing, heating and alloying of the zinc coating applied to the steel sheet may be performed to produce a galvannealed steel sheet. Although the alloying conditions are not particularly limited, the alloying temperature is preferably 460 °C or higher. It is preferably 580 °C or lower. This is because if the alloying temperature is lower than 460 °C, the alloying speed is slow and productivity is reduced. On the other hand, if the alloying temperature exceeds 580 °C, a large amount of Γ-phase may be formed, deteriorating the coating adhesion.

The method of producing a hot-dip galvanized steel sheet according to the present disclosure enables the production of a hot-dip galvanized steel sheet with excellent surface appearance, coating adhesion, and corrosion resistance.

### EXAMPLES

Steel samples having the chemical compositions containing the elements listed in Table 1, with the balance being Fe and inevitably impurities, were prepared by steelmaking in a converter, and made into slabs by continuous casting. Each obtained slab was heated in a heating furnace at 1240 °C for 60 minutes, hot rolled, and coiled at 550 °C to obtain a hot-rolled steel sheet. Each hot-rolled steel sheet was then pickled to remove black scale, and cold rolled to obtain a cold-rolled steel sheet with a thickness of 1.4 mm. Each cold-rolled steel sheet was subjected to first annealing, Fe coating formation, and second annealing under the conditions listed in Tables 2 and 3. In Tables 2 and 3, the holding time in the first annealing represents the time for which the steel sheet was held in a temperature range of 650 °C to 900 °C, and the holding time in the second annealing represents the time for which the steel sheet was held in a temperature range of 700 °C to 900 °C. Then, hot-dip galvanizing was applied to obtain a hot-dip galvanized steel sheet. In some of our examples and some of the comparative examples, alloying treatment was further applied to obtain galvannealed steel sheets. For the production of hot-dip galvanized steel sheets, a zinc bath with a bath temperature of 460 °C and an Al concentration of 0.20 % in the bath was used, and for the production of galvannealed steel sheets, a zinc bath with a bath temperature of 460 °C and an Al concentration of 0.14 % in the bath was used.

The coating weight of Fe was measured by Glow Discharge Light Emission Analysis (GDS). The analysis was conducted in the depth direction from the surface of each steel sheet with Fe coating, and the depth at which the intensity of Si and Mn, which were not included in the Fe coating but contained only in the steel sheet, decreased to half of the intensity inside the steel sheet was used as the Fe coating thickness.

The steel sheets thus obtained were investigated for tensile properties, coating surface appearance, coating adhesion, and corrosion resistance, and the results are listed in Tables 2 and 3.

### (Tensile Properties)

Tensile test was conducted in accordance with JIS Z 2241 (2011) using JIS No. 5 test pieces taken such that the tensile direction was perpendicular to the rolling direction of the steel sheet, and TS (tensile strength) was measured.

### (Surface Appearance)

The presence or absence of appearance defects such as non-coating or pinholes was visually judged, and those test pieces were judged as "Good" when there was no appearance defect, and "Poor" when there was appearance defect.

### (Coating Adhesion)

The coating adhesion of each galvannealed steel sheet was evaluated by testing its resistance to powdering. Sellotape^{®} ("Sellotape" is a registered trademark in Japan, other countries, or both) was stuck to the surface of each galvannealed steel sheet. Then, each galvannealed steel sheet was bent 90 degrees on the tape surface and then bent back, and the tape was peeled off. The amount of coating peeled off from each steel sheet adhering to the peeled tape was measured as the number of Zn counts by means of an X-ray fluorescence spectrometer equipped with a rhodium tube under the conditions of an acceleration voltage of 50 kV, a current of 50 mA, and a sample size of 30 mmΦ. Those steel sheets with rank 2 or lower were evaluated as "Good", rank 3 as "Satisfactory", and rank 4 or higher as "Unsatisfactory" in light of the criteria given below. In this case, those with rank 3 or lower were considered acceptable.

X-ray fluorescence count ranks:
1: 0 to less than 2000
2: 2000 to less than 5000
3: 5000 to less than 8000
4: 8000 to less than 12000
5: 12000 or more

The coating adhesion of each hot-dip galvanized steel sheet was evaluated by conducting a ball impact test. That is, cellophane tape was stuck to the region where the ball was dropped, and then peeled off, and the presence or absence of peeling of the coating layer was visually judged. In addition, for those with no peeling of the coating layer, cross-sectional observation was conducted using SEM to investigate the presence or absence of microscopic peeling. The ball impact test was conducted with a ball mass of 1.8 kg and a drop height of 100 cm.
Good: No visible peeling or microscopic peeling of the coating layer.
Fair: No visible peeling of the coating layer, but some microscopic peeling.
Poor: The coating layer visually peeled off.

### (Corrosion Resistance)

Corrosion resistance was evaluated as described below. After chemical conversion treatment and electrodeposition coating were applied to each obtained hot-dip galvanized steel sheet and galvannealed steel sheet, a cut flaw was made on the sample surface, and SST test was conducted. Then, the corrosion resistance was evaluated by comparing the swelling width around the cut flaw after the SST test with that of the comparison material, mild steel. The ratings of "Excellent" and "Good" are acceptable levels.

| | |
|---|---|
| Excellent: | Swelling width is equivalent to mild steel |
| Good: | Swelling width is 1.5 times or less of that of mild steel |
| Poor: | Swelling width is more than 1.5 times of that of mild steel |

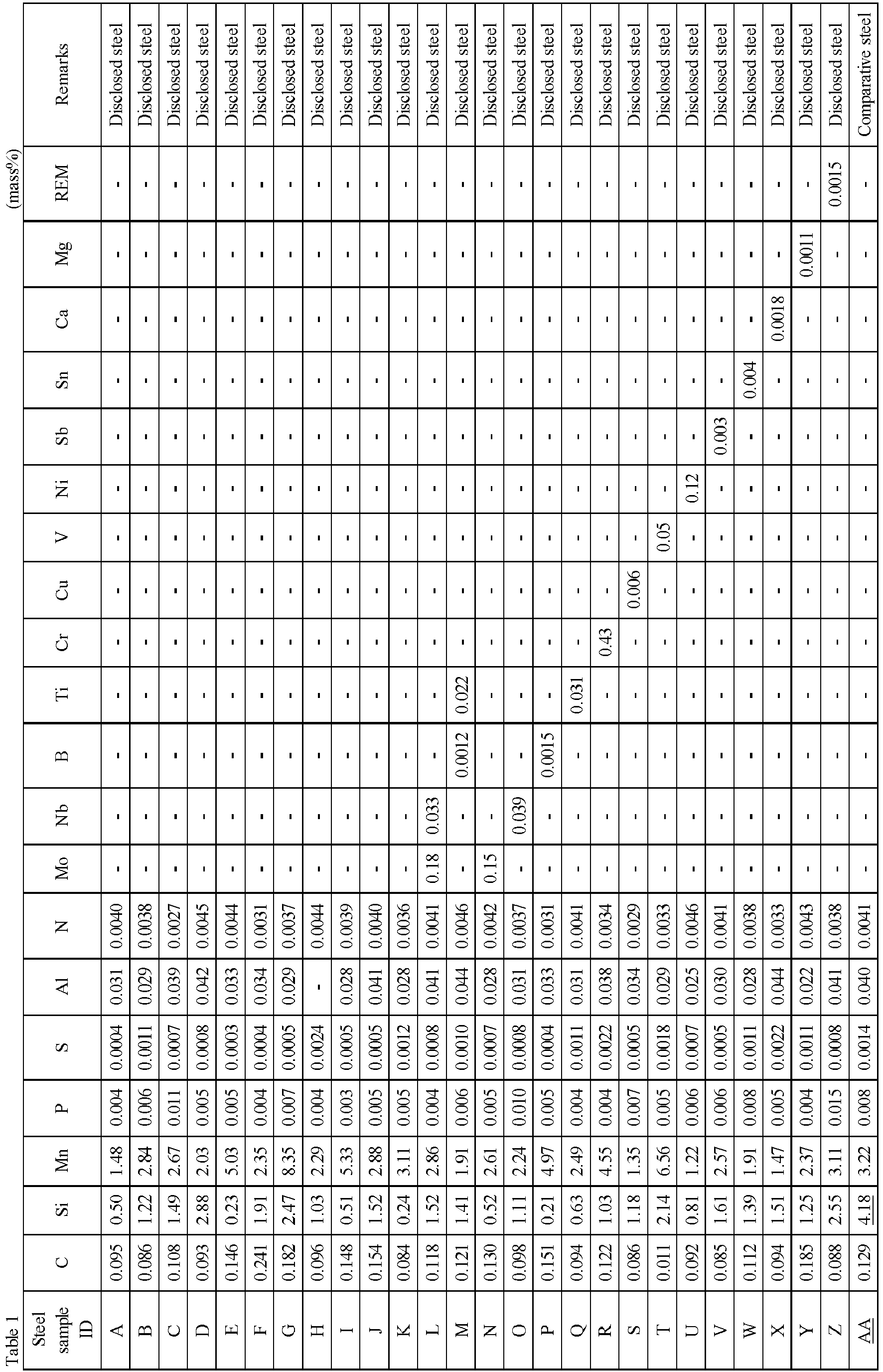

**Table 2**

| No. | Steel | First annealing | | | | Fe coating formation | | | Second annealing | | | | Alloying treatment | Coating | | | Material property | Remarks |
|---|---|---|---|---|---|---|---|---|---|---|---|---|---|---|---|---|---|---|
| | | H₂ (%) | Dew point (°C) | Maximum arrival temp. (°C) | Holding time (s) | Fe coating process | Coating weight of Fe (g/m²) | Additive element (%) | H₂ (%) | Dew point (°C) | Maximum arrival temp. (°C) | Holding time (s) | Alloying temp. (°C) | Surface appearance | Adhesion | Corrosion resistance | TS (MPa) | |
| 1 | A | 5.0 | -40 | 800 | 120 | Electroplating | 2.0 | - | 10.0 | -40 | 800 | 200 | 490 | Good | Good | Good | 611 | Example |
| 2 | A | 8.0 | -45 | 740 | 50 | Vapor deposition | 0.4 | - | 5.0 | -45 | 750 | 180 | 520 | Good | Good | Excellent | 612 | Example |
| 3 | A | 15.0 | -35 | 850 | 180 | Electroplating | 4.0 | - | 8.0 | -30 | 850 | 100 | 500 | Good | Good | Good | 607 | Example |
| 4 | A | 10.0 | -35 | 800 | 100 | Electroplating | 3.2 | - | 5.0 | -40 | 800 | 80 | - | Good | Good | Good | 623 | Example |
| 5 | A | 5.0 | -40 | 670 | 150 | Electroplating | 1.2 | - | 5.0 | -40 | 800 | 180 | 550 | Good | Good | Good | 653 | Example |
| 6 | A | 8.0 | -40 | 800 | 100 | Electroplating | 4.5 | 0.0010% of O | 10.0 | -45 | 800 | 100 | 510 | Good | Good | Good | 645 | Example |
| 7 | B | 5.0 | -30 | 820 | 120 | Electroplating | 7.4 | - | 5.0 | -30 | 760 | 300 | 520 | Good | Good | Excellent | 800 | Example |
| 8 | B | 10.0 | -40 | 750 | 100 | Electroplating | 4.7 | - | 10.0 | -35 | 800 | 80 | 550 | Good | Good | Good | 821 | Example |
| 9 | B | 15.0 | -50 | 700 | 50 | Electroplating | 1.5 | - | 12.0 | -45 | 780 | 150 | 500 | Good | Good | Excellent | 816 | Example |
| 10 | B | 5.0 | -45 | 700 | 80 | Electroplating | 5.2 | - | 5.0 | -35 | 800 | 150 | - | Good | Good | Good | 792 | Example |
| 11 | B | 5.0 | -40 | 700 | 150 | Electroplating | 2.8 | - | 5.0 | -35 | 880 | 60 | 620 | Good | Good | Good | 876 | Example |
| 12 | C | 10.0 | -45 | 750 | 150 | Electroplating | 3.7 | - | 15.0 | -40 | 750 | 50 | 520 | Good | Good | Good | 1002 | Example |
| 13 | C | 5.0 | -50 | 780 | 200 | Electroplating | 1.5 | - | 5.0 | -30 | 850 | 100 | 550 | Good | Good | Good | 1105 | Example |
| 14 | C | 10.0 | -35 | 800 | 180 | Electroplating | 6.4 | - | 5.0 | -50 | 780 | 180 | 520 | Good | Good | Excellent | 996 | Example |
| 15 | C | 20.0 | -30 | 820 | 100 | Electroplating | 1.2 | - | 10.0 | -45 | 800 | 80 | 500 | Good | Good | Excellent | 1052 | Example |
| 16 | C | 5.0 | -30 | 800 | 150 | Electroplating | 2.8 | - | 2.0 | -45 | 750 | 180 | 510 | Good | Good | Excellent | 1033 | Example |
| 17 | C | 10.0 | -40 | 780 | 200 | Electroplating | 4.1 | 0.002 % of O | 5.0 | -40 | 820 | 100 | 530 | Good | Good | Excellent | 1105 | Example |
| 18 | D | 15.0 | -35 | 700 | 120 | Electroplating | 5.4 | - | 12.0 | -30 | 810 | 120 | 490 | Good | Good | Excellent | 1205 | Example |
| 19 | D | 15.0 | -35 | 750 | 120 | Electroplating | 2.3 | - | 4.0 | -45 | 850 | 150 | 550 | Good | Good | Excellent | 1266 | Example |
| 20 | D | 12.0 | -40 | 800 | 180 | Electroplating | 5.9 | - | 5.0 | -20 | 800 | 100 | 500 | Good | Good | Excellent | 1272 | Example |
| 21 | D | 8.0 | -30 | 700 | 50 | Electroplating | 4.6 | - | 10.0 | -40 | 850 | 140 | 530 | Good | Good | Excellent | 1197 | Example |
| 22 | D | 10.0 | -35 | 720 | 200 | Electroplating | 3.7 | - | 10.0 | -10 | 750 | 80 | 500 | Good | Good | Good | 1215 | Example |
| 23 | E | 10.0 | -35 | 770 | 120 | Electroplating | 5.6 | - | 12.0 | -10 | 820 | 250 | 550 | Good | Good | Excellent | 1190 | Example |
| 24 | E | 5.0 | -30 | 800 | 200 | Electroplating | 1.2 | - | 5.0 | -35 | 850 | 110 | 530 | Good | Good | Good | 1244 | Example |
| 25 | E | 20.0 | -40 | 700 | 120 | Electroplating | 3.2 | - | 7.0 | -30 | 850 | 180 | 520 | Good | Good | Good | 1238 | Example |
| 26 | E | 15.0 | -40 | 810 | 180 | Electroplating | 1.9 | - | 15.0 | -40 | 800 | 150 | 530 | Good | Good | Good | 1208 | Example |
| 27 | E | 3.0 | -40 | 800 | 120 | Electroplating | 2.8 | - | 10.0 | -45 | 780 | 100 | 550 | Good | Good | Excellent | 1217 | Example |
| 28 | E | 5.0 | -35 | 800 | 100 | Electroplating | 4.2 | - | 10.0 | -10 | 850 | 100 | - | Good | Good | Good | 1222 | Example |
| 29 | E | 10.0 | -35 | 850 | 180 | Cold spray | 7.6 | 0.05 % of C | 15.0 | -40 | 780 | 150 | 540 | Good | Good | Good | 1190 | Example |
| 30 | F | 5.0 | -30 | 850 | 80 | Electroplating | 5.8 | - | 5.0 | -35 | 750 | 150 | 550 | Good | Good | Excellent | 1021 | Example |
| 31 | F | 5.0 | -35 | 780 | 180 | Electroplating | 1.2 | - | 15.0 | -30 | 840 | 180 | 520 | Good | Good | Good | 1066 | Example |
| 32 | F | 8.0 | -40 | 750 | 250 | Vapor deposition | 4.7 | - | 10.0 | -40 | 750 | 120 | 500 | Good | Good | Excellent | 1243 | Example |
| 33 | F | 10.0 | -30 | 720 | 120 | Electroplating | 1.2 | - | 10.0 | -30 | 830 | 50 | 550 | Good | Good | Good | 1262 | Example |
| 34 | F | 8.0 | -35 | 700 | 180 | Electroplating | 6.6 | - | 15.0 | -35 | 800 | 120 | 530 | Good | Good | Excellent | 1199 | Example |
| 35 | F | 10.0 | -25 | 780 | 120 | Electroplating | 3.4 | - | 10.0 | -45 | 800 | 150 | 530 | Good | Good | Excellent | 1208 | Example |
| 36 | G | 15.0 | -30 | 840 | 80 | Electroplating | 1.4 | - | 20.0 | -40 | 770 | 80 | 520 | Good | Good | Good | 1499 | Example |
| 37 | G | 5.0 | -35 | 850 | 300 | Electroplating | 3.7 | - | 5.0 | -30 | 750 | 150 | 520 | Good | Good | Good | 1385 | Example |
| 38 | G | 10.0 | -35 | 800 | 120 | Electroplating | 2.8 | - | 8.0 | -50 | 850 | 180 | 550 | Good | Good | Excellent | 1344 | Example |
| 39 | G | 20.0 | -45 | 750 | 80 | Electroplating | 1.4 | - | 15.0 | -30 | 800 | 160 | 500 | Good | Good | Good | 1199 | Example |
| 40 | G | 5.0 | -30 | 800 | 200 | Electroplating | 1.2 | - | 10.0 | -40 | 770 | 200 | 530 | Good | Good | Good | 1305 | Example |
| 41 | H | 10.0 | -40 | 850 | 120 | Electroplating | 3.7 | - | 5.0 | -45 | 800 | 100 | 520 | Good | Good | Excellent | 800 | Example |
| 42 | H | 12.0 | -50 | 750 | 200 | Electroplating | 2.1 | - | 10.0 | -50 | 850 | 150 | 500 | Good | Good | Good | 819 | Example |
| 43 | H | 5.0 | -40 | 800 | 180 | Cold spray | 8.3 | - | 8.0 | -40 | 750 | 210 | 490 | Good | Good | Excellent | 849 | Example |
| 44 | H | 5.0 | -30 | 840 | 80 | Electroplating | 2.9 | - | 20.0 | -25 | 720 | 300 | 540 | Good | Good | Good | 839 | Example |
| 45 | H | 10.0 | -30 | 750 | 250 | Electroplating | 5.1 | - | 12.0 | -10 | 800 | 150 | 510 | Good | Good | Good | 864 | Example |
| 46 | I | 5.0 | -35 | 730 | 120 | Electroplating | 3.1 | - | 5.0 | -40 | 800 | 150 | 530 | Good | Good | Good | 1012 | Example |
| 47 | I | 15.0 | -50 | 800 | 50 | Electroplating | 1.9 | - | 15.0 | -45 | 750 | 180 | 540 | Good | Good | Excellent | 1128 | Example |
| 48 | I | 15.0 | -35 | 780 | 200 | Electroplating | 7.8 | - | 10.0 | -40 | 750 | 100 | 530 | Good | Good | Good | 1099 | Example |
| 49 | I | 5.0 | -40 | 800 | 150 | Vapor deposition | 0.8 | - | 8.0 | -50 | 810 | 80 | 500 | Good | Good | Excellent | 998 | Example |
| 50 | I | 10.0 | -35 | 750 | 120 | Electroplating | 5.9 | - | 5.0 | -30 | 760 | 100 | 530 | Good | Good | Excellent | 1005 | Example |
| 51 | J | 20.0 | -45 | 750 | 120 | Electroplating | 2.4 | - | 10.0 | -45 | 800 | 150 | 500 | Good | Good | Excellent | 1008 | Example |
| 52 | J | 5.0 | -40 | 750 | 200 | Electroplating | 6.1 | - | 5.0 | -45 | 750 | 120 | 540 | Good | Good | Excellent | 1018 | Example |
| 53 | J | 15.0 | -30 | 800 | 80 | Electroplating | 1.6 | - | 15.0 | -35 | 850 | 120 | 520 | Good | Good | Good | 1085 | Example |
| 54 | J | 5.0 | -45 | 810 | 150 | Electroplating | 3.3 | - | 20.0 | -40 | 750 | 100 | 530 | Good | Good | Good | 1206 | Example |
| 55 | J | 20.0 | -40 | 700 | 200 | Electroplating | 2.1 | - | 10.0 | -50 | 700 | 50 | 500 | Good | Good | Excellent | 1222 | Example |
| 56 | K | 10.0 | -30 | 750 | 120 | Electroplating | 1.2 | - | 12.0 | -45 | 750 | 180 | 500 | Good | Good | Excellent | 661 | Example |
| 57 | K | 5.0 | -45 | 740 | 320 | Electroplating | 2.7 | - | 9.0 | -40 | 850 | 80 | 500 | Good | Good | Good | 638 | Example |
| 58 | K | 5.0 | -30 | 800 | 100 | Electroplating | 4.4 | - | 10.0 | -40 | 810 | 200 | 490 | Good | Good | Good | 604 | Example |
| 59 | K | 10.0 | -35 | 810 | 150 | Electroplating | 2.8 | 0.0002 % of O | 15.0 | -45 | 800 | 150 | 500 | Good | Good | Good | 608 | Example |
| 60 | L | 15.0 | -40 | 680 | 180 | Electroplating | 1.9 | - | 8.0 | -40 | 800 | 100 | 520 | Good | Good | Good | 1195 | Example |
| 61 | L | 5.0 | -45 | 800 | 120 | Electroplating | 3.3 | - | 5.0 | -35 | 790 | 180 | 530 | Good | Good | Good | 1212 | Example |
| 62 | L | 20.0 | -35 | 780 | 200 | Electroplating | 1.2 | - | 15.0 | -45 | 750 | 80 | 520 | Good | Good | Excellent | 1244 | Example |
| 63 | L | 5.0 | -30 | 740 | 120 | Electroplating | 5.5 | - | 10.0 | -50 | 850 | 200 | 500 | Good | Good | Excellent | 1017 | Example |
| 64 | L | 10.0 | -45 | 750 | 100 | Electroplating | 2.3 | - | 15.0 | -50 | 760 | 150 | 530 | Good | Good | Excellent | 1100 | Example |
| 65 | M | 10.0 | -40 | 850 | 200 | Electroplating | 2.2 | - | 8.0 | -45 | 750 | 100 | 500 | Good | Good | Excellent | 1061 | Example |
| 66 | M | 5.0 | -45 | 880 | 80 | Electroplating | 4.2 | - | 12.0 | -40 | 800 | 90 | 530 | Good | Good | Good | 998 | Example |
| 67 | N | 10.0 | -30 | 750 | 120 | Vapor deposition | 0.6 | - | 5.0 | -10 | 780 | 180 | 500 | Good | Good | Good | 806 | Example |
| 68 | N | 10.0 | -30 | 800 | 180 | Electroplating | 2.4 | - | 18.0 | -30 | 830 | 90 | 520 | Good | Good | Good | 861 | Example |
| 69 | O | 5.0 | -35 | 850 | 150 | Electroplating | 4.9 | - | 6.0 | -35 | 800 | 120 | 540 | Good | Good | Good | 798 | Example |
| 70 | P | 10.0 | -40 | 850 | 120 | Electroplating | 1.9 | - | 10.0 | -20 | 820 | 80 | 530 | Good | Good | Good | 1042 | Example |
| 71 | Q | 5.0 | -35 | 740 | 80 | Electroplating | 4.5 | - | 15.0 | -40 | 760 | 200 | 500 | Good | Good | Good | 835 | Example |
| 72 | R | 5.0 | -50 | 750 | 80 | Electroplating | 1.2 | - | 10.0 | -45 | 800 | 150 | 530 | Good | Good | Excellent | 1236 | Example |
| 73 | S | 10.0 | -50 | 700 | 200 | Electroplating | 3.8 | - | 12.0 | -40 | 820 | 100 | 530 | Good | Good | Good | 1005 | Example |
| 74 | T | 8.0 | -30 | 880 | 150 | Cold spray | 9.1 | - | 10.0 | -15 | 780 | 100 | 520 | Good | Good | Excellent | 1502 | Example |
| 75 | U | 5.0 | -40 | 740 | 120 | Electroplating | 1.1 | - | 5.0 | -40 | 800 | 50 | 530 | Good | Good | Good | 1130 | Example |
| 76 | V | 15.0 | -45 | 800 | 200 | Electroplating | 2.3 | - | 10.0 | -35 | 840 | 200 | 530 | Good | Good | Good | 1237 | Example |
| 77 | W | 10.0 | -35 | 780 | 150 | Electroplating | 1.7 | - | 15.0 | -45 | 820 | 150 | 500 | Good | Good | Excellent | 1216 | Example |
| 78 | X | 10.0 | -30 | 750 | 140 | Electroplating | 3.3 | - | 5.0 | -40 | 760 | 80 | 520 | Good | Good | Good | 1199 | Example |
| 79 | Y | 5.0 | -40 | 820 | 150 | Electroplating | 4.2 | - | 10.0 | -40 | 760 | 100 | 530 | Good | Good | Good | 1180 | Example |
| 80 | Z | 5.0 | -40 | 800 | 180 | Electroplating | 5.1 | - | 5.0 | -35 | 750 | 100 | 540 | Good | Good | Excellent | 1222 | Example |

**Table 3**

| No | Steel | First annealing | | | | Fe coating formation | | Second annealing | | | | Alloying treatment | Coating | | | Material property | Remarks |
|---|---|---|---|---|---|---|---|---|---|---|---|---|---|---|---|---|---|
| | | H₂ (%) | Dew point (°C) | Maximum arrival temp. (°C) | Holding time (s) | Fe coating process | Coating weight of Fe (g/m²) | H₂ (%) | Dew point (°C) | Maximum arrival temp. (°C) | Holding time (s) | Alloying temp. (°C) | Surface appearance | Adhesion | Corrosion resistance | TS (MPa) | |
| 1 | A | 5.0 | -40 | 600 | 0 | Electroplating | 1.2 | 5.0 | -40 | 800 | 180 | 590 | Poor | Unsatisfactory | Poor | 631 | Comparative Example |
| 2 | A | 5.0 | -35 | 750 | 5 | Electroplating | 2.1 | 10.0 | -50 | 700 | 180 | 520 | Poor | Unsatisfactory | Good | 597 | Comparative Example |
| 3 | A | 10.0 | -35 | 730 | 100 | Electroplating | 4.2 | - | - | - | - | 580 | Poor | Unsatisfactory | Poor | 629 | Comparative Example |
| 4 | B | 10.0 | -40 | 750 | 120 | Vapor deposition | 0.2 | 15.0 | -35 | 750 | 100 | 540 | Poor | Unsatisfactory | Poor | 823 | Comparative Example |
| 5 | B | 5.0 | -40 | 700 | 150 | Electroplating | 2.8 | 5.0 | -35 | 950 | 60 | 620 | Poor | Unsatisfactory | Good | 864 | Comparative Example |
| 6 | C | 10.0 | -30 | 800 | 200 | Electroplating | 3.3 | 12.0 | 15 | 800 | 100 | 560 | Poor | Unsatisfactory | Good | 1014 | Comparative Example |
| 7 | c | 3.0 | -30 | 750 | 100 | Cold spray | 30.2 | 10.0 | -40 | 800 | 60 | 450 | Good | Unsatisfactory | Good | 1108 | Comparative Example |
| 8 | D | 8.0 | -40 | 550 | 0 | Electroplating | 3.0 | 5.0 | -35 | 800 | 180 | 540 | Poor | Unsatisfactory | Good | 1233 | Comparative Example |
| 9 | E | 8.0 | -25 | 800 | 50 | Electroplating | 4.1 | 15.0 | -40 | 600 | 0 | 520 | Poor | Unsatisfactory | Good | 1218 | Comparative Example |
| 10 | E | 10.0 | -30 | 750 | 100 | Electroplating | 22.5 | 15.0 | -50 | 800 | 100 | 450 | Good | Unsatisfactory | Good | 1203 | Comparative Example |
| 11 | F | 5.0 | -40 | 870 | 150 | Electroplating | 5.8 | 5.0 | -40 | 750 | 5 | 530 | Good | Unsatisfactory | Good | 1200 | Comparative Example |
| 12 | F | 10.0 | -15 | 850 | 180 | Electroplating | 2.9 | 5.0 | -40 | 790 | 50 | 520 | Good | Good | Poor | 1198 | Comparative Example |
| 13 | G | 10.0 | -45 | 750 | 80 | Electroplating | 3.8 | 5.0 | 10 | 750 | 50 | 560 | Poor | Unsatisfactory | Good | 1343 | Comparative Example |
| 14 | G | 5.0 | -35 | 800 | 100 | Electroplating | 0.2 | 10.0 | -35 | 800 | 100 | - | Poor | Unsatisfactory | Poor | 1299 | Comparative Example |
| 15 | K | 5.0 | -40 | 800 | 120 | Electroplating | 0.1 | 10.0 | -20 | 700 | 50 | 540 | Poor | Unsatisfactory | Poor | 653 | Comparative Example |
| 16 | T | - | - | - | - | Electroplating | 9.3 | 10.0 | -20 | 800 | 200 | - | Poor | Satisfactory | Good | 1487 | Comparative Example |
| 17 | L | 8.0 | -35 | 700 | 150 | - | 0.0 | 5.0 | -30 | 750 | 200 | 520 | Poor | Unsatisfactory | Poor | 1214 | Comparative Example |
| 18 | Z | 5.0 | -40 | 800 | 120 | Electroplating | 2.0 | 10.0 | -40 | 950 | 50 | 630 | Poor | Unsatisfactory | Good | 1242 | Comparative Example |
| 19 | AA | 5.0 | -40 | 800 | 120 | Electroplating | 2.0 | 10.0 | -40 | 800 | 50 | 490 | Poor | Unsatisfactory | Poor | 998 | Comparative Example |

In our examples, high-strength hot-dip galvanized steel sheets with excellent surface appearance, coating adhesion, and corrosion resistance were obtained. In contrast, in the comparative examples, any of the characteristics of surface appearance, coating adhesion, and corrosion resistance were inferior.

### INDUSTRIAL APPLICABILITY

According to the method of producing a hot-dip galvanized steel sheet disclosed herein, it is possible to produce a hot-dip galvanized steel sheet with excellent surface appearance, coating adhesion, and corrosion resistance. High-strength hot-dip galvanized steel sheets produced according to the present disclosure are highly beneficial in industrial terms, because they can improve fuel efficiency when applied to, for example, automobile structural parts, by a reduction in the weight of automotive bodies.

## Claims

1. A method of producing a hot-dip galvanized steel sheet, the method comprising:
performing first annealing comprising holding a steel sheet having a chemical composition containing, in mass%, Si: 0.10 % or more and 3.0 % or less and Mn: 1.0 % or more and 10.0 % or less within a temperature range of 650 °C to 900 °C for 30 seconds or more in a reducing atmosphere containing hydrogen and having a dew point of -65 °C or higher and -20 °C or lower, and then cooling the steel sheet;
then forming, on a surface of the steel sheet, an Fe coating with a coating weight of 0.3 g/m² or more and 10.0 g/m² or less;
then performing second annealing comprising holding the steel sheet within a temperature range of 700 °C to 900 °C for 30 seconds or more in a reducing atmosphere containing hydrogen and having a dew point of 0 °C or lower, heating the steel sheet to a maximum arrival temperature of 900 °C or lower, and then cooling the steel sheet; and
then applying a hot-dip galvanized coating onto the steel sheet.

2. The method of producing a hot-dip galvanized steel sheet according to claim 1, further comprising:
heating and alloying the galvanized coating applied onto the steel sheet.

3. The method of producing a hot-dip galvanized steel sheet according to claim 1 or 2, wherein in the first annealing, the reducing atmosphere has a hydrogen concentration of 1.0 vol% or more and 30.0 vol% or less.

4. The method of producing a hot-dip galvanized steel sheet according to any one of claims 1 to 3, wherein in the second annealing, the reducing atmosphere has a hydrogen concentration of 1.0 vol% or more and 30.0 vol% or less.

5. The method of producing a hot-dip galvanized steel sheet according to any one of claims 1 to 4, wherein the chemical composition further contains, in mass%, C: 0.010 % or more and 0.250 % or less, P: 0.100 % or less, S: 0.0200 % or less, N: 0.0100 % or less, with the balance being Fe and inevitable impurities.

6. The method of producing a hot-dip galvanized steel sheet according to claim 5, wherein the chemical composition further contains, in mass%, at least one selected from the group consisting of Al: 0.01 % or more and 2.0 % or less, Mo: 0.005 % or more and 1.0 % or less, Nb: 0.005 % or more and 0.20 % or less, B: 0.0003 % or more and 0.0050 % or less, Ti: 0.005 % or more and 0.20 % or less, Cr: 0.005 % or more and 1.0 % or less, Cu: 0.005 % or more and 1.0 % or less, V: 0.005 % or more and 0.50 % or less, Ni: 0.005 % or more and 1.0 % or less, Sb: 0.003 % or more and 0.10 % or less, Sn: 0.002 % or more and 0.20 % or less, Ca: 0.0005 % or more and 0.0050 % or less, Mg: 0.0005 % or more and 0.0050 % or less, and REM: 0.0005 % or more and 0.0050 % or less.
